# EUROPEAN PATENT APPLICATION

(11) **EP 4 610 309 A1**
(43) Date of publication of application: **03.09.2025**
(21) Application number: 23882341.3
(22) Date of filing: 28.09.2023
(51) Int. Cl.: C08L 27/16, C08K 3/16, H01M 4/139, H01M 4/62

(54) **FLUORIDE PARTICLE DISPERSION**

(30) Priority: 26.10.2022 JP 2022171253
(71) Applicant: Stella Chemifa Corporation, Osaka-shi, Osaka 541-0044 (JP)
(72) Inventor: YAMAMOTO Hiroya, Izumiotsu-shi, Osaka 595-0075 (JP); FUJIWARA Keigo, Izumiotsu-shi, Osaka 595-0075 (JP); TOMISAKI Megumi, Izumiotsu-shi, Osaka 595-0075 (JP); NISHIDA Tetsuo, Izumiotsu-shi, Osaka 595-0075 (JP); HASEBE Rui, Izumiotsu-shi, Osaka 595-0075 (JP); URAYA Masanori, Izumiotsu-shi, Osaka 595-0075 (JP)
(74) Representative: Meissner Bolte Partnerschaft mbB
(86) International application number: PCT/JP2023/035492
(87) International publication number: WO 2024/090132

(57) **Abstract**

Provided is a liquid dispersion of fluoride particles suitable for an optical material of an optical film such as an antireflection film, an electrode material of a secondary battery, and the like by satisfactorily dispersing fluoride particles even without using a dispersant containing a conventional surfactant. The liquid dispersion of fluoride particles according to the present invention is characterized by including an organic solvent, fluoride particles dispersed in the organic solvent, and polyvinylidene fluoride as a dispersant for dispersing the fluoride particles.

## Description

### TECHNICAL FIELD

The present invention relates to a liquid dispersion of fluoride particles suitable for an optical material in an optical film such as an antireflection film and an electrode material of a secondary battery.

### BACKGROUND ART

Fluorides (fluorine compounds) are used as an optical material or an electrode material in such fields as an optical film and a secondary battery. Fluorides have a characteristic of having a lower refractive index as compared with oxides or the like. Therefore, as disclosed in Patent Document 1, particles of fluorides are in use for a filling material (filler) for an antireflection film. In addition, as described in Patent Documents 2 to 4, particles of fluorides are in use also as an electrode material in a secondary battery typified by a lithium ion secondary battery.

Here, since the film thickness of an antireflection film is usually about 100 nm, as the particles of a fluoride to be used for the filling material, those having a particle size smaller than the film thickness are required. In addition, also in the case of being used for an electrode material of a secondary battery, use of a fluoride in the form of fine particles may contribute to improvement in battery performance (Patent Documents 3 and 4).

However, regarding a powder of fine particles, not limited to fluorides, primary particles thereof aggregate to form a secondary aggregate. When a fluoride is used in the state of a secondary aggregate, the particle size is excessively large, and thus the fluoride may not be suitable for the optical material or the electrode material described above. Therefore, usually, particles of a fluoride are dispersed in a dispersion medium such as an organic solvent and then used.

In such a liquid dispersion of fluoride particles, a dispersant is added in order to improve the dispersibility of the fluoride particles or maintain a good dispersion state (Patent Document 5). As the dispersant, for example, a surfactant such as a polyoxyalkylene alkyl ether phosphate (refractive index n = 1.46) is used. However, since such a surfactant has a high refractive index, there is a problem that the refractive index of the antireflection film itself is increased even if fluoride particles having a small refractive index are used. Also in a secondary battery, when a surfactant remains in an electrode, there is a problem that battery characteristics are deteriorated.

### PRIOR ART DOCUMENTS

### PATENT DOCUMENTS

Patent Document 1: JP 2011 - 195 693 A
Patent Document 2: JP 2014 - 191 983 A
Patent Document 3: JP 2008 - 536 285 A
Patent Document 4: JP 2019 - 169 438 A
Patent Document 5: JP 4 655 614 B2

### SUMMARY OF THE INVENTION

### PROBLEMS TO BE SOLVED BY THE INVENTION

The present invention has been made in view of the above problems, and an object of the present invention is to provide a liquid dispersion of fluoride particles suitable for an optical material of an optical film such as an antireflection film, an electrode material of a secondary battery, and the like by satisfactorily dispersing fluoride particles even without using a dispersant containing a conventional surfactant.

### SOLUTIONS TO THE PROBLEMS

In order to solve the above problems, the liquid dispersion of fluoride particles of the present invention is characterized by comprising an organic solvent, fluoride particles dispersed in the organic solvent, and polyvinylidene fluoride as a dispersant for dispersing the fluoride particles.

In the above configuration, the content of the polyvinylidene fluoride is preferably in a range of 0.01 mass% to 3 mass% with respect to the total mass of the liquid dispersion of fluoride particles.

In the above configuration, the content of the fluoride particles is preferably in a range of 1 mass% to 20 mass% with respect to the total mass of the liquid dispersion of fluoride particles.

In the above configuration, it is preferable that the fluoride particles include at least one kind of fluoride particles of any among compounds represented by the following chemical Formulas (1) to (3), barium strontium lanthanum fluoride, and barium strontium cerium fluoride

M¹ₐM²_{b}F_{(a+2b)} ... (1)

wherein M¹ is an alkali metal, M² is an alkaline earth metal, and a and b are integers satisfying conditions of 0 ≤ a ≤ 3 and 0 ≤ b ≤ 1;

   M¹_{c}M³_{d}F_{(c+3d)} ... (2)
wherein M¹ is an alkali metal, M³ is Al, Y, or a lanthanoid, and c and d are integers satisfying the conditions of 0 ≤ c ≤ 5 and 0<d ≤ 3;

   M²M³F₅ ... (3)
wherein M² is an alkaline earth metal and M³ is Al, Y or lanthanoid.

In the above configuration, the M¹ₐM² _{b}F_{(a+2b)} is preferably LiF, CaF₂, or MgF₂.

In the above configuration, the M¹_{c}M³_{d}F_{(c+3d)} is preferably AlF₃, Na₃AlF₆, Na₅Al₃F₁₄, LaF₃, CeF₃, YF₃, YbF₃, NaYF₄, or NaYbF₄.

In the above configuration, the M²M³F₅ is preferably BaLaF₅, BaCeF₅, SrLaF₅, or SrCeF₅.

In the above configuration, the organic solvent is preferably at least one selected from a group consisting of N-methylpyrrolidone, hexamethylphosphoramide, and dimethylacetamide.

### EFFECTS OF THE INVENTION

According to the liquid dispersion of fluoride particles of the present invention, inclusion of polyvinylidene fluoride allows the fluoride particles to be well dispersed in the organic solvent. Thus, in the present invention, the use of a dispersant composed of a conventional surfactant such as a polyoxyalkylene alkyl ether phosphate (refractive index n = 1.46) can be omitted. Since the refractive index of polyvinylidene fluoride is 1.42 and has a smaller value than that of a polyoxyalkylene alkyl ether phosphate, for example, when an optical film such as an antireflection film is formed using the liquid dispersion of fluoride particles of the present invention, an increase in the refractive index of the optical film itself can be suppressed or reduced as compared with a conventional optical film using a polyoxyalkylene alkyl ether phosphate.

In addition, polyvinylidene fluoride is a compound that is also used as a conductive auxiliary agent for an electrode active material of a secondary battery, and does not deteriorate battery characteristics unlike a dispersant composed of a conventional surfactant. Therefore, the liquid dispersion of fluoride particles of the present invention can also be suitably used for, for example, an electrode material of a secondary battery.

### BRIEF DESCRIPTION OF THE DRAWINGS

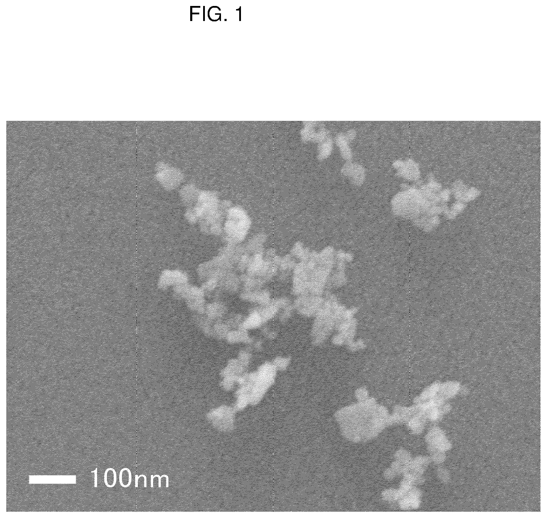

- FIG. 1: is an electron microscope image showing lithium fluoride particles according to Example 1 of the present invention.

### EMBODIMENTS OF THE INVENTION

### Liquid dispersion of fluoride particles

The liquid dispersion of fluoride particles (hereinafter, sometimes referred to as "liquid dispersion") according to the present embodiment will be described below.

The liquid dispersion of the present embodiment comprises at least fluoride particles, polyvinylidene fluoride, and an organic solvent. The fluoride particles exist in a state of being dispersed in the organic solvent. In addition, the liquid dispersion of the present embodiment may be in the form composed of only the fluoride particles, polyvinylidene fluoride, and the organic solvent.

Here, the term "liquid dispersion" as used herein refers to a dispersion in which a dispersoid is dispersed in a liquid dispersion medium. Therefore, the term "liquid dispersion" does not include a dispersion such as a solid colloid (organogel) in which a dispersoid is dispersed in a solid dispersion medium and the fluidity thereof is reduced.

The fluoride particles preferably include at least one kind of fluoride particles of any among compounds represented by the following chemical Formulas (1) to (3), barium strontium lanthanum fluoride (BaSrLaF₇), and barium strontium cerium fluoride (BaSrCeF₇)

M¹ₐM²_{b}F_{(a+2b)} ... (1)

wherein M¹ is an alkali metal, M² is an alkaline earth metal, and a and b are integers satisfying conditions of 0 ≤ a ≤ 3 and 0 ≤ b ≤ 1;

   M¹_{c}M³_{d}F_{(c+3d)} ... (2)
wherein M¹ is an alkali metal, M³ is Al, Y, or a lanthanoid, and c and d are integers satisfying the conditions of 0 ≤ c ≤ 5 and 0<d ≤ 3;

   M²M³F₅ ... (3)
wherein M² is an alkaline earth metal and M³ is Al, Y or lanthanoid.

The alkali metal as M¹ is not particularly limited, and examples thereof include lithium, sodium, and potassium. The alkaline earth metal as M² is not particularly limited, and examples thereof include magnesium, calcium, barium, and strontium. Furthermore, the lanthanoid as M³ is not particularly limited, and examples thereof include lanthanum, cerium, praseodymium, neodymium, promethium, samarium, europium, gadolinium, terbium, dysprosium, holmium, erbium, thulium, ytterbium, and lutetium.

Examples of M¹ₐM² _{b}F_{(a+2b)} specifically include lithium fluoride (LiF), sodium fluoride (NaF), magnesium fluoride (MgF₂), calcium fluoride (CaF₂), barium fluoride (BaF₂), lithium calcium fluoride (LiCaF₃), lithium magnesium fluoride (LiMgF₃), lithium barium fluoride (LiBaF₃), sodium calcium fluoride (NaCaF₃), sodium magnesium fluoride (NaMgF₃), sodium barium fluoride (NaBaF₃), potassium calcium fluoride (KCaF₃), potassium magnesium fluoride (KMgF₃), and potassium barium fluoride (KBaF₃). Among these fluoride particles, lithium fluoride, calcium fluoride, magnesium fluoride, sodium magnesium fluoride, and potassium magnesium fluoride are preferable from the viewpoint of a small refractive index value.

Examples of M¹_{c}M³_{d}F_{(c+3d)} specifically include aluminum fluoride (AlF₃), yttrium fluoride (YF₃), lanthanum fluoride (LaF₃), cerium fluoride (CeF₃), praseodymium fluoride (PrF₃), neodymium fluoride (NdF₃), promethium fluoride (PmF₃), samarium fluoride (SmF₃), europium fluoride (EuF₃), gadolinium fluoride (GdF₃), terbium fluoride (TbF₃), dysprosium fluoride (DyF₃), holmium fluoride (HoF₃), erbium fluoride (ErF₃), thulium fluoride (TmF₃), ytterbium fluoride (YbF₃), lutetium fluoride (LuF₃), lithium hexafluoroaluminate (Li₃AlF₆), sodium hexafluoroaluminate (cryolite) (Na₃AlF₆), potassium hexafluoroaluminate (K₃AlF₆), chiolite (Na₅Al₃F₁₄), sodium yttrium fluoride (NaYF₄), and sodium ytterbium fluoride (NaYbF₄). Among these fluoride particles, aluminum fluoride, cryolite, chiolite, lanthanum fluoride, cerium fluoride, yttrium fluoride, ytterbium fluoride, sodium yttrium fluoride, and sodium ytterbium fluoride are preferable from the viewpoint of a small refractive index value.

Examples of M²M³F₅ specifically include barium lanthanum fluoride (BaLaF₅), barium cerium fluoride (BaCeF₅), strontium lanthanum fluoride (SrLaF₅), and strontium cerium fluoride (SrCeF₅). Among these fluoride particles, particles composed of barium lanthanum fluoride or barium cerium fluoride are preferable from the viewpoint of further improving the battery characteristics.

The particles of the fluorides recited above as examples may be used singly, or two or more thereof may be used in combination. Among the particles of the fluorides recited above as examples, particles composed of Na₃AlF₆, which has a refractive index of less than 1.34 and a low solubility in water, are particularly preferable.

The content of the fluoride particles is preferably in a range of 1% by mass to 20% by mass, more preferably in a range of 3% by mass to 15% by mass, and still more preferably in a range of 5% by mass to 10% by mass with respect to the total mass of the liquid dispersion of fluoride particles. By setting the content of the fluoride particles to 1% by mass or more, for example, even when the liquid dispersion of fluoride particles of the present embodiment is used as a material of an optical film and the fluoride particles are applied as a filler of an optical film such as an antireflection film, a favorable low refractive index property can be maintained.

Meanwhile, by setting the content of the fluoride particles to 20 mass% or less, it is possible to suppress prolongation of the dispersion time of fluoride particles and to reduce the probability that the fluoride particles aggregate with each other.

The average dispersion particle size (d50) of the fluoride particles is preferably in a range of 1 nm to 500 nm, more preferably in a range of 1 nm to 100 nm, and still more preferably 1 nm to 50 nm. By setting the average dispersion particle size to 1 nm or more, it is possible to suppress distinct aggregation of the fluoride particles due to intermolecular force. Meanwhile, by setting the average dispersion particle size to 500 nm or less, for example, when the fluoride particles are used as a filler of an optical film such as an antireflection film, it is possible to reduce leaving of the fluoride particles from the optical film and deterioration of the light transparency. The method and apparatus for measuring the average dispersion particle size of the fluoride particles are not particularly limited, and are, for example, as described in Examples described later.

The shape of the fluoride particles is not particularly limited, and may be, for example, any of a substantially spherical shape, a cubic shape, a chain shape, a needle shape, a plate shape, a scale shape, a rod shape, a fiber shape, or an irregular shape.

Polyvinylidene fluoride functions as a dispersant for the fluoride particles. Owing to this, polyvinylidene fluoride can improve the dispersibility of the fluoride particles in the organic solvent. Polyvinylidene fluoride has a refractive index of 1.42 and is smaller in the value of refractive index as compared with conventional surfactants to be used as a dispersant.

For example, in the case where an optical film is formed using a polyoxyalkylene alkyl ether phosphate having a refractive index of 1.46 as a surfactant and magnesium fluoride having a refractive index of 1.38 as fluoride particles, if the polyoxyalkylene alkyl ether phosphate remains in the optical film, there arises a problem that the optical film itself has a large refractive index because the refractive index of the polyoxyalkylene alkyl ether phosphate is larger than the refractive index of magnesium fluoride.

In the case of using polyvinylidene fluoride, however, since the value of the refractive index thereof is smaller than that of the polyoxyalkylene alkyl ether phosphate as described above, it is possible to suppress an increase in the refractive index of the optical film itself. As a result, it is possible to form an optical film superior in low refractive index property as compared with a conventional optical film formed using a surfactant as a dispersant.

In the present embodiment, polyvinylidene fluoride having any crystal structure among type I, type II, and type III is used without limitation. Type I means a case where the crystal structure is a planar zigzag structure, type II means a case where the crystal structure is a twisted structure, and type III means a case where the crystal structure is in an intermediate state between type I and type II. In the present invention, polyvinylidene fluoride having any of type I to type III crystal structures may be used alone, or any two or more of these may be used in combination. In addition, any of the polyvinylidene fluorides having type I to type III crystal structures can be used in any combination with the fluoride particles recited above as examples.

The content of polyvinylidene fluoride is preferably in a range of 0.01 mass% to 3 mass%, more preferably in a range of 0.05 mass% to 2 mass%, and still more preferably in a range of 0.1 mass% to 1 mass% with respect to the total mass of the liquid dispersion of fluoride particles. By setting the content of polyvinylidene fluoride to 0.01 mass% or more, dispersibility of fluoride particles can be improved. In addition, by setting the content of polyvinylidene fluoride to 3% by mass or less, it is possible to reduce the light transparency of an optical film from being excessively impaired.

The mass average molecular weight of polyvinylidene fluoride is not particularly limited, but is usually 1.0 × 10⁵ to 1.7 × 10⁶, preferably 1.5 × 10⁵ to 1.5 × 10⁶, and more preferably 2.5 × 10⁵ to 1.2 × 10⁶. By setting the mass average molecular weight of polyvinylidene fluoride to 1.0 × 10⁵ or more, aggregation of the fluoride particles can be suppressed and the dispersibility of the fluoride particles can be improved. Meanwhile, by setting the mass average molecular weight of polyvinylidene fluoride to 1.7 × 10⁶ or less, dissolution of the polyvinylidene fluoride in an organic solvent can be improved.

The organic solvent is not particularly limited, but one in which polyvinylidene fluoride is dissolved is preferable. Examples of such an organic solvent include N-methylpyrrolidone, hexamethylphosphoramide, and dimethylacetamide. These organic solvents can be used singly, or two or more thereof can be used in combination. In addition, the organic solvents recited as examples can be used in any combination with any of the fluoride particles recited as examples above and polyvinylidene fluorides having crystal structures of type I to type III.

The content of the organic solvent is preferably in a range of 80 mass% to 99 mass%, more preferably in a range of 85 mass% to 97 mass%, and still more preferably in a range of 90 mass% to 95 mass% with respect to the total mass of the liquid dispersion of fluoride particles.

The liquid dispersion of fluoride particles of the present embodiment may contain a fluorine-containing surfactant for the purpose of further improving the dispersibility of the fluoride particles. In this case, the liquid dispersion of the present embodiment may be an aspect composed of only fluoride particles, polyvinylidene fluoride, an organic solvent, and a fluorine-containing surfactant. The refractive index of the fluorine-containing surfactant is, for example, smaller than that of hydrocarbon-based surfactants.

Therefore, even when a fluorine-containing surfactant is added to the liquid dispersion of fluoride particles, the refractive index is increased as compared with the case of using a hydrocarbon-based surfactant, and it is possible to suppress an excessive decrease in the light reflectance of an antireflection film.

The fluorine-containing surfactant is not particularly limited, and examples thereof include anionic fluorocarbon surfactants. The term "anionic fluorocarbon surfactant" as used herein means a surfactant containing one or two or more hydrocarbon moieties in which at least one hydrogen atom is substituted with a fluorine atom, and one or two or more anionic groups in the molecule.

The anionic fluorocarbon surfactant can be represented by the following Chemical Formula (4).

R-X-M ... (4)

R in Chemical Formula (4) is a hydrocarbon moiety, and represents an alkyl group having 2 to 18 carbon atoms, preferably 2 to 10 carbon atoms, more preferably 4 to 6 carbon atoms, in which at least one hydrogen atom is substituted with a fluorine atom: an aryl group having 2 to 18 carbon atoms, preferably 5 to 15 carbon atoms, more preferably 8 to 12 carbon atoms, in which at least one hydrogen atom is substituted with a fluorine atom; or a polyoxyalkylene alkyl ether group having 2 to 18 carbon atoms, preferably 5 to 15 carbon atoms, more preferably 8 to 12 carbon atoms, in which at least one hydrogen atom is substituted with a fluorine atom. R may be either linear or branched.

When the range of the number of carbon atoms is expressed in the present description, it means that the range includes the number of carbon atoms of all integers included in the range. Therefore, for example, an alkyl group having "1 to 3 carbon atoms" means all alkyl groups having 1, 2, and 3 carbon atoms.

X and M in Chemical Formula (4) each represent an anionic group (hydrophilic group). Among them, X represents -COO⁻, -PO₄⁻, -SO₃⁻, or -SO₄⁻. M represents a counter ion of the hydrophilic group, and is preferably a proton (H⁺) or an onium ion in the present embodiment. These counter ions can improve the solubility and dispersibility of the fluoride particles in an organic solvent.

Furthermore, the onium ion is preferably represented by the following Chemical Formula (5).

H⁺· [NR¹R²R³] ... (5)

wherein R¹, R², R³ in Chemical Formula (5) are each independently any one of hydrogen, an alkyl group having 1 to 8 carbon atoms, preferably 1 to 5 carbon atoms, and more preferably 1 to 3 carbon atoms; an aryl group having 1 to 8 carbon atoms, preferably 1 to 5 carbon atoms, and more preferably 1 to 3 carbon atoms; and a hydroxyalkyl group having 1 to 8 carbon atoms, preferably 1 to 5 carbon atoms, more preferably 1 to 3 carbon atoms. The alkyl group, the aryl group, and the hydroxyalkyl group as R¹, R², and R³ may be either linear or branched.

Examples of the onium ion more specifically include an ammonium ion, a methylammonium ion, a trimethylammonium ion, an ethylammonium ion, a dimethylammonium ion, and a triethanolammonium ion. Among these onium ions, an ammonium ion is particularly preferable from the viewpoint of the solubility of the fluoride particles in the organic solvent.

Examples of the anionic fluorocarbon surfactant include 3H-tetrafluoropropionic acid, 5H-octafluoropentanoic acid, 7H-dodecafluoroheptanoic acid, and 9H-hexadecafluorononanoic acid. The anionic fluorocarbon surfactants recited as examples may be used singly, or two or more thereof may be used in combination. Among these anionic fluorocarbon surfactants, 7H-dodecafluoroheptanoic acid is preferable from the viewpoint of the dispersibility of the fluoride particles in the organic solvent. Furthermore, the anionic fluorocarbon surfactants recited as examples can be used in any combination with any of the fluoride particles recited as examples, polyvinylidene fluoride, and the organic solvent.

As to the content of the fluorine-containing surfactant, for example, when the liquid dispersion of the present embodiment is used for a material of an optical film, the fluorine-containing surfactant is preferably contained within a range in which the refractive index of the optical film itself does not excessively increase. In addition, in the case of being used for an electrode material of a secondary battery, the fluorine-containing surfactant is preferably contained within a range in which battery characteristics are not excessively deteriorated.

Specifically, the content of the fluorine-containing surfactant is preferably in a range of 1% by mass to 10% by mass, and more preferably in a range of 2% by mass to 5% by mass with respect to 100% by mass of the fluoride particles. By setting the content of the fluorine-containing surfactant to 1% by mass or more, the dispersibility of the fluoride particles can be improved. In addition, by setting the content of the fluorine-containing surfactant to 10 mass% or less, for example, in the case of use for the formation of an optical film, it is possible to reduce the deterioration of the light permeability of the optical film caused by excessive suppression of the refractive index of the optical film.

The liquid dispersion of fluoride particles of the present embodiment may contain at least one among a fluorine-containing lithium salt, an FSI salt, a fluorine-containing sodium salt, a fluorine-containing potassium salt, a fluorine-containing rubidium salt, and a fluorine-containing cesium salt as long as the dispersibility of the fluoride particles is not inhibited.

The fluorine-containing lithium salt is not particularly limited, and examples thereof include LiPF₆, LiBF₄, Li₂SiF₆, LiPO₂F₂, Li₂PO₃F, LiCF₃SO₃, LiN(FSO₂)₂, LiN(CF₃SO₂)₂, LiN(C₂F₅SO₂)₂, LiN(CF₃SO₂)(C₄F₉SO₂), LiC(C₂F₅SO₂)₃, LiAsF₆, Li[B(C₂O₄)F₂], Li[P(C₂O₄)F₄], and Li[P(C₂O₄)₂F₂].

The content of the fluorine-containing lithium salt is preferably in a range of 100 mass% to 250 mass%, and more preferably in a range of 100 mass% to 200 mass% with respect to 100 mass% of the fluoride particles.

The FSI salt is not particularly limited, and examples thereof include trimethylhexylammonium bis(trifluoromethanesulfonyl)imide (TMHA-TFSI), trimethylhexylammonium bis(fluorosulfonyl)imide (TMHA-FSI), tri-n-butylmethylammonium bis(trifluoromethylsulfonyl)imide (TBMA-TFSI), triethylmethylphosphonium bis(trifluoromethylsulfonyl)imide (TEMP-TFSI), and tri-n-butylmethylphosphonium bis(trifluoromethylsulfonyl)imide (TBMP-TFSI).

The content of the FSI salt is preferably in a range of 100 mass% to 250 mass%, and more preferably in a range of 100 mass% to 200 mass% with respect to 100 mass% of the fluoride particles.

The fluorine-containing sodium salt is not particularly limited, and examples thereof include Na₂FePO₄F, Na₂VPO₄F, Na₂MnPO₄F, Na₂CoPO₄F, Na₂NiPO₄F, NaFeSO₄F, NaMnSO₄F, NaCoSO₄F, Na₃FeF₆, Na₂MnF₆, NaPF₆, NaAsF₆, NaSbF₆, NaBF₄, NaCF₃SO₃, and NaN(SO₂CF₃)₂.

The content of the fluorine-containing sodium salt is preferably in a range of 100 mass% to 250 mass%, and more preferably in a range of 100 mass% to 200 mass% with respect to 100 mass% of the fluoride particles.

The fluorine-containing potassium salt is not particularly limited, and examples thereof include K₂FePO₄F, K₂MnPO₄F, K₂CoPO₄F, KFeSO₄F, KCoSO₄F, KMnSO₄F, KNiSO₄F, K₃FeF₆, K₂MnF₆, KPF₆, KAsF₆, KSbF₆, KBF₄, KCF₃SO₃, and KN(SO₂CF₃)₂.

The content of the fluorine-containing potassium salt is preferably in a range of 100 mass% to 250 mass%, and more preferably in a range of 100 mass% to 200 mass% with respect to 100 mass% of the fluoride particles.

The fluorine-containing rubidium salt is not particularly limited, and examples thereof include Rb₃FeF₆, Rb₂MnF₆, RbPF₆, RbAsF₆, RbSbF₆, RbBF₄, RbCF₃SO₃, and RbN(SO₂CF₃)₂.

The content of the fluorine-containing rubidium salt is preferably in a range of 100 mass% to 250 mass%, and more preferably in a range of 100 mass% to 200 mass% with respect to 100 mass% of the fluoride particles.

The fluorine-containing cesium salt is not particularly limited, and examples thereof include Cs₃FeF₆, Cs₂MnF₆, CsPF₆, CsAsF₆, CsSbF₆, CsBF₄, CsCF₃SO₃, and CsN(SO₂CF₃)₂.

The content of the fluorine-containing cesium salt is preferably in a range of 100 mass% to 250 mass%, and more preferably in a range of 100 mass% to 200 mass% with respect to 100 mass% of the fluoride particles.

In the present embodiment, the moisture concentration in the liquid dispersion of fluoride particles is preferably 1.5 mass% or less, more preferably 1.0 mass% or less, and still more preferably 0.8 mass% or less with respect to 100 mass% of the liquid dispersion of fluoride particles. When the moisture concentration in the liquid dispersion of fluoride particles is 1.5 mass% or less, aggregation of the fluoride particles in the liquid dispersion is suppressed, and the stability of the liquid dispersion can be further improved.

The liquid dispersion of fluoride particles of the present embodiment may further contain other components as long as the effects of the present invention such as the dispersibility of the fluoride particles are not impaired. Examples of such other components include an acrylic resin, a polyester resin, a polycarbonate resin, a polyamide resin, a urethane resin, a vinyl chloride resin, a fluororesin, a silicone resin, an epoxy resin, a melamine resin, a phenol resin, a butyral resin, and a vinyl acetate resin.

### Method for producing liquid dispersion of fluoride particles

Next, a method for producing the liquid dispersion of fluoride particles according to the present embodiment will be described below.

The liquid dispersion of fluoride particles of the present embodiment can be obtained by mixing fluoride particles, polyvinylidene fluoride, and an organic solvent, and dispersing the fluoride particles in the organic solvent.

In a method for producing the liquid dispersion of the present embodiment, the method of mixing and the order of addition of fluoride particles, polyvinylidene fluoride, and an organic solvent are not particularly limited. For example, the liquid dispersion of the present embodiment may be produced by adding fluoride particles to an organic solvent, subjecting the mixed liquid to a dispersion treatment using a disperser, and then adding polyvinylidene fluoride. The liquid dispersion of the present embodiment may be produced by mixing fluoride particles, polyvinylidene fluoride, and an organic solvent at a time and then performing a dispersion treatment using a disperser.

The method of dispersing the fluoride particles in the organic solvent is not particularly limited, and examples thereof include a method using a wet bead mill, a method using a wet jet mill, and a method using ultrasonic waves. The dispersion method may be selected in consideration of the quality, such as average dispersion particle size and purity, of the intended fluoride particles and the apparatus to be used for milling.

For example, when it is desired to improve the dispersibility of fluoride particles, a method using a wet bead mill is preferable. In the wet bead mill, since particles are made finer using a medium such as zirconia beads, the dispersion force of fluoride particles can be improved. However, the resulting liquid dispersion may be contaminated by the medium. When it is desired to improve the purity of the liquid dispersion, a method using a wet jet mill is preferable.

The method using the wet jet mill is a wet milling method using no medium, and is capable of preventing contamination by a medium, which may occur in a wet bead mill. However, since no medium is used, the dispersion force of the fluoride particles may decrease. The dispersion time is not particularly limited, and may be appropriately set according to, for example,, the type of the fluoride particles and the organic solvent.

In the process of producing the liquid dispersion, it is preferable to control the moisture concentration in the liquid dispersion. Examples of the method for controlling the moisture concentration include a method of performing wet pulverization in a place where the dew point is controlled, such as a dry room, and a method of performing treatment in an environment of an inert gas or dry air in a sealed space so that the fluoride particles, polyvinylidene fluoride, the organic solvent, and the liquid dispersion containing these are not exposed to the outside air. The inert gas is not particularly limited, and examples thereof include nitrogen and argon.

The moisture adsorbed on the surface of the fluoride particles may be removed in advance before the fluoride particles are added to and dispersed in the organic solvent. Furthermore, moisture may be removed from the organic solvent. As a method for removing the moisture adsorbed on the surface, for example, the moisture can be removed by heat treatment. The drying temperature in the heat treatment is preferably in a range of 100 °C to 200 °C, and more preferably in a range of 110°C to 150 °C.

The drying time is preferably in a range of 2 hours to 34 hours, and more preferably in a range of 5 hours to 20 hours. Examples of the method for removing moisture from the organic solvent include distillation, centrifugation, and use of a dehydrating material (molecular sieves, zeolites, ion exchange resins, activated alumina, etc.). Alternatively, for example, a method of bubbling an inert gas such as nitrogen into an aprotic organic solvent may be used.

When an optional component (namely, the above-described fluorine-containing surfactant, fluorine-containing lithium salt, FSI salt, fluorine-containing sodium salt, fluorine-containing potassium salt, fluorine-containing rubidium salt, and fluorine-containing cesium salt) and the above-described other component is added to the liquid dispersion of fluoride particles, a mixing method and an addition order of these components are not particularly limited.

For example, the liquid dispersion of fluoride particles may be prepared by adding an optional component during a dispersion treatment of a mixed liquid including fluoride particles, polyvinylidene fluoride, and an organic solvent. In addition, the liquid dispersion of fluoride particles may be prepared by adding an optional component after completion of the dispersion treatment of the mixed liquid including the fluoride particles, polyvinylidene fluoride, and the organic solvent, and further subjecting the resulting mixture to ultrasonic treatment.

### Other matters

The liquid dispersion of fluoride particles of the present embodiment can be used as an optical material of an optical film such as an antireflection film, for example, by being mixed with a known binder component. The liquid dispersion of fluoride particles of the present embodiment can also be suitably used for an electrode material of a secondary battery.

In the optical film made using the liquid dispersion of fluoride particles of the present embodiment, fluoride particles as s filler can be uniformly contained in the film. Here, polyvinylidene fluoride is a dispersant having a smaller refractive index as compared with a conventional dispersant composed of a surfactant, such as a polyoxyalkylene alkyl ether phosphate. Therefore, even if polyvinylidene fluoride remains in an optical film, it is possible to suppress an increase in the refractive index of the optical film itself.

As a result, the optical film made using a liquid dispersion of the fluoride particles of the present embodiment has a lower refractive index as compared with an optical film formed using a conventional dispersion, and has uniform and favorable optical characteristics in the plane. The optical film is not particularly limited, and examples thereof include an antireflection film.

In addition, polyvinylidene fluoride is a compound that is also used as a conductive auxiliary agent for an electrode active material of a secondary battery, and does not deteriorate battery characteristics unlike a dispersant composed of a conventional surfactant. Therefore, in the electrode of a secondary battery produced using the liquid dispersion of fluoride particles of the present embodiment, it is possible to reduce or suppress deterioration of battery characteristics as compared with an electrode formed using a conventional dispersion.

### EXAMPLES

The present invention will be described in detail by way of Examples, but the present invention is not limited to the following Examples without departing from the scope of the present invention.

### Example 1

190 g of N-methylpyrrolidone (NMP, manufactured by Hayashi Pure Chemical Ind., Ltd., chemical pure (CP)) and 0.2 g of polyvinylidene fluoride (PVDF, manufactured by KUREHA CORPORATION, product number: #1100) were mixed, and the mixture was stirred until PVDF was dissolved. The crystal structure of the polyvinylidene fluoride was type II, and the mass average molecular weight was 2.8 × 10⁵.

Next, 10 g of LiF particles (manufactured by Stella Chemifa Corporation) was added to N-methylpyrrolidone in which PVDF was dissolved, whereby a slurry in which the LiF particles were aggregated was prepared. This slurry was charged into a wet bead mill (manufactured by Nippon Coke & Engineering Co., Ltd.), zirconia beads (manufactured by Nikkato Corporation) were added thereto, and a dispersion treatment was performed. After the slurry was charged, a portion where the slurry was exposed to the outside air was set to a nitrogen atmosphere.

A liquid dispersion of LiF particles according to this example was thereby obtained. The liquid dispersion obtained was observed with an electron microscope, and was confirmed to be LiF particles having a size of 100 nm or less. FIG. 1 shows an electron microscope image of LiF particles obtained with an electron microscope. In addition, physical property values of the liquid dispersion obtained are shown in Table 1.

### Example 2

192 g of N-methylpyrrolidone (NMP, manufactured by Hayashi Pure Chemical Ind., Ltd., chemical pure (CP)) and 5 g of polyvinylidene fluoride (PVDF, manufactured by KUREHA CORPORATION, product number: #1100) were mixed, and the mixture was stirred until PVDF was dissolved.

Next, 3 g of LiF particles (manufactured by Stella Chemifa Corporation) was added to N-methylpyrrolidone in which PVDF was dissolved, whereby a slurry in which the LiF particles were aggregated was prepared. This slurry was charged into a wet bead mill (manufactured by Nippon Coke & Engineering Co., Ltd.), zirconia beads (manufactured by Nikkato Corporation) were added thereto, and a dispersion treatment was performed.

After the slurry was charged, a portion where the slurry was exposed to the outside air was set to a nitrogen atmosphere. A liquid dispersion of LiF particles according to this example was thereby obtained. The liquid dispersion obtained was observed with an electron microscope, and was confirmed to be particles having a size of 100 nm or less. Physical property values of the liquid dispersion obtained are shown in Table 1.

### Example 3

In this example, CaF₂ particles (manufactured by Stella Chemifa Corporation) were used as fluoride particles instead of LiF particles. Other than that, a liquid dispersion of CaF₂ particles according to this example was obtained in the same manner as in Example 1. Physical property values of the liquid dispersion obtained are shown in Table 1.

### Example 4

In this example, CaF₂ particles (manufactured by Stella Chemifa Corporation) were used as fluoride particles instead of LiF particles. Other than that, a liquid dispersion of CaF₂ particles according to this example was obtained in the same manner as in Example 2. Physical property values of the liquid dispersion obtained are shown in Table 1.

### Example 5

In this example, MgF₂ particles (manufactured by Stella Chemifa Corporation) were used as fluoride particles instead of LiF particles. Other than that, a liquid dispersion of MgF₂ particles according to this example was obtained in the same manner as in Example 1. Physical property values of the liquid dispersion obtained are shown in Table 1.

### Example 6

In this example, MgF₂ particles (manufactured by Stella Chemifa Corporation) were used as fluoride particles instead of LiF particles. Other than that, a liquid dispersion of MgF₂ particles according to this example was obtained in the same manner as in Example 2. Physical property values of the liquid dispersion obtained are shown in Table 1.

### Example 7

192 g of N-methylpyrrolidone (NMP, manufactured by Hayashi Pure Chemical Ind., Ltd., chemical pure (CP)) and 5 g of polyvinylidene fluoride (PVDF, manufactured by KUREHA CORPORATION, product number: #1100) were mixed, and the mixture was stirred until PVDF was dissolved.

Next, 3 g of LiF particles (manufactured by Stella Chemifa Corporation) and 3 g of LiPO₂F₂ were added to N-methylpyrrolidone in which PVDF was dissolved, whereby a slurry in which the LiF particles were aggregated was prepared. This slurry was charged into a wet bead mill (manufactured by Nippon Coke & Engineering Co., Ltd.), zirconia beads (manufactured by Nikkato Corporation) were added thereto, and a dispersion treatment was performed.

After the slurry was charged, a portion where the slurry was exposed to the outside air was set to a nitrogen atmosphere. The liquid dispersion obtained was observed with an electron microscope, and was confirmed to be particles having a size of 100 nm or less. A liquid dispersion of LiF particles according to this example was thereby obtained. Physical property values of the liquid dispersion obtained are shown in Table 1.

### Example 8

In this example, LiPF₆ was used instead of LiPO₂F₂. Other than that, a liquid dispersion of LiF particles according to this example was obtained in the same manner as in Example 7. Physical property values of the liquid dispersion obtained are shown in Table 1.

### Example 9

In this example, tri-n-butylmethylammonium bis(trifluoromethylsulfonyl)imide (TBMA-TFSI) was used instead of LiPO₂F₂. Other than that, a liquid dispersion of LiF particles according to this example was obtained in the same manner as in Example 7. Physical property values of the liquid dispersion obtained are shown in Table 1.

### Example 10

In this example, N,N-dimethylacetamide (DMAc, manufactured by Hayashi Pure Chemical Ind., Ltd.) was used as an organic solvent in place of N-methylpyrrolidone. Other than that, a liquid dispersion of LiF particles according to this example was obtained in the same manner as in Example 1. Physical property values of the liquid dispersion obtained are shown in Table 1.

### Example 11

In this example, Na₃AlF₆ particles (manufactured by Stella Chemifa Corporation) were used as fluoride particles instead of LiF particles. Other than that, a liquid dispersion of Na₃AlF₆ particles according to this example was obtained in the same manner as in Example 1. Physical property values of the liquid dispersion obtained are shown in Table 1.

### Example 12

In this example, MgF₂ particles (manufactured by Stella Chemifa Corporation) were used as fluoride particles instead of LiF particles. In addition, the addition amount of polyvinylidene fluoride was changed from 0.2 g to 0.02 g. Other than those, a liquid dispersion of MgF₂ particles according to this example was obtained in the same manner as in Example 1. Physical property values of the liquid dispersion obtained are shown in Table 1.

### Example 13

In this example, MgF₂ particles (manufactured by Stella Chemifa Corporation) were used as fluoride particles instead of LiF particles. In addition, the addition amount of MgF₂ particles was changed from 10 g to 20 g. Other than those, a liquid dispersion of MgF₂ particles according to this example was obtained in the same manner as in Example 1. Physical property values of the liquid dispersion obtained are shown in Table 1.

### Example 14

In this example, MgF₂ particles (manufactured by Stella Chemifa Corporation) were used as fluoride particles instead of LiF particles. In addition, the addition amount of MgF₂ particles was changed from 10 g to 30 g. Other than those, a liquid dispersion of MgF₂ particles according to this example was obtained in the same manner as in Example 1. Physical property values of the liquid dispersion obtained are shown in Table 1.

### Example 15

In this example, MgF₂ particles (manufactured by Stella Chemifa Corporation) were used as fluoride particles instead of LiF particles. In addition, KPF₆ was used instead of LiPO₂F₂. Other than those, a liquid dispersion of MgF₂ particles according to this example was obtained in the same manner as in Example 7. Physical property values of the liquid dispersion obtained are shown in Table 1.

### Example 16

In this example, MgF₂ particles (manufactured by Stella Chemifa Corporation) were used as fluoride particles instead of LiF particles. In addition, 7H-dodecafluoroheptanoic acid was used instead of LiPO₂F₂. Other than those, a liquid dispersion of MgF₂ particles according to this example was obtained in the same manner as in Example 7. Physical property values of the liquid dispersion obtained are shown in Table 1.

### Comparative Example 1

190 g of N-methylpyrrolidone (NMP, manufactured by Hayashi Pure Chemical Ind., Ltd., chemical pure (CP)) and 10 g of LiF particles (manufactured by Stella Chemifa Corporation) were added, whereby a slurry in which the LiF particles were aggregated was prepared. This slurry was charged into a wet bead mill (manufactured by Nippon Coke & Engineering Co., Ltd.), zirconia beads (manufactured by Nikkato Corporation) were added thereto, and a dispersion treatment was performed. After the slurry was charged, a portion where the slurry was exposed to the outside air was set to a nitrogen atmosphere. A liquid dispersion of LiF particles according to this comparative example was thereby obtained. Physical property values of the liquid dispersion obtained are shown in Table 1.

### Comparative Example 2

In this comparative example, CaF₂ particles (manufactured by Stella Chemifa Corporation) were used as fluoride particles instead of LiF particles. Other than that, a liquid dispersion of CaF₂ particles according to this comparative example was obtained in the same manner as in Comparative Example 1. Physical property values of the liquid dispersion obtained are shown in Table 1.

### Comparative Example 3

In this comparative example, MgF₂ particles (manufactured by Stella Chemifa Corporation) were used as fluoride particles instead of LiF particles. Other than that, a liquid dispersion of MgF₂ particles according to this comparative example was obtained in the same manner as in Comparative Example 1. Physical property values of the liquid dispersion obtained are shown in Table 1.

**[Table 1]**

| | Fluoride particles | Dispersant | Organic solvent | Optional component | Mass ratio of liquid dispersion (Fluoride particles/dispersant/ organic solvent/optional component) | Dispersibility |
|---|---|---|---|---|---|---|
| Example 1 | LiF | PVDF | NMP | - | 4.9%/0.1%/95.0%/0 | ○ |
| Example 2 | LiF | PVDF | NMP | - | 1.6%/2.7%/95.7%/0 | ○ |
| Example 3 | CaF₂ | PVDF | NMP | - | 4.9%/0.1%/95.0%/0 | ○ |
| Example 4 | CaF₂ | PVDF | NMP | - | 1.6%/2.7%/95.7%/0 | ○ |
| Example 5 | MgF₂ | PVDF | NMP | - | 4.9%/0.1%/95.0%/0 | ○ |
| Example 6 | MgF₂ | PVDF | NMP | - | 1.6%/2.7%/95.7%/0 | ○ |
| Example 7 | LiF | PVDF | NMP | LiPO₂F₂ | 1.6%/2.7%/94.1%/1.6% | ○ |
| Example 8 | LiF | PVDF | NMP | LiPF₆ | 1.6%/2.7%/94.1%/1.6% | ○ |
| Example 9 | LiF | PVDF | NMP | TBMA-TFSI | 1.6%/2.7%/94.1%/1.6% | ○ |
| Example 10 | LiF | PVDF | DMAc | - | 4.9%/0.1%/95.0%/0 | ○ |
| Example 11 | Na₃AlF₆ | PVDF | NMP | - | 4.9%/0.1%/95.0%/0 | ○ |
| Example 12 | MgF₂ | PVDF | NMP | - | 4.9%/0.01%/95.0%/0 | ○ |
| Example 13 | MgF₂ | PVDF | NMP | - | 10%/0.01 %/90.0%/0 | ○ |
| Example 14 | MgF₂ | PVDF | NMP | - | 15%/0.01 %/85.0%/0 | ○ |
| Example 15 | MgF₂ | PVDF | NMP | KPF₆ | 1.6%/2.7%/94.1%/1.6% | ○ |
| Example 16 | MgF₂ | PVDF | NMP | 7H-Dodecafluoroheptanoic acid | 1.6%/2.7%/94.1%/1.6% | ○ |
| Comparative Example 1 | LiF | - | NMP | - | 5%/0/95%/0 | × |
| Comparative Example 2 | CaF₂ | - | NMP | - | 5%/0/95%/0 | × |
| Comparative Example 3 | MgF₂ | - | NMP | - | 5%/0/95%/0 | × |

| | | | | | | |
|---|---|---|---|---|---|---|
| ("%" in the table represents % by mass.) | | | | | | |

### Evaluation of dispersibility

The dispersibility of the fluoride particles in the liquid dispersion of fluoride particles obtained in each of Examples and Comparative Examples was evaluated as follows.

That is, first, the liquid dispersion of fluoride particles obtained in each of Examples and Comparative Examples was visually observed, and it was confirmed whether or not the fluoride particles sedimented, aggregated, and separated into two layers. Subsequently, each of the liquid dispersions of fluoride particles was irradiated with a green laser pointer, and the presence or absence of occurrence of the Tyndall phenomenon was confirmed. The dispersibility of the liquid dispersion in which the Tyndall phenomenon was confirmed was rated as ∘. For the liquid dispersion in which the fluoride particles in the liquid dispersion were aggregated or settled, or in which the Tyndall phenomenon was not confirmed, the dispersibility was rated as ×. The results are shown in Table 1.

As shown in Table 1, it was confirmed that the liquid dispersions of Examples 1 to 16, in which PVDF was added as a dispersant for fluoride particles, had better dispersibility as compared with the liquid dispersions of Comparative Examples 1 to 3, in which PVDF was not added.

## Claims

1. A liquid dispersion of fluoride particles, comprising:
- an organic solvent;
- fluoride particles dispersed in the organic solvent; and
- polyvinylidene fluoride as a dispersant for dispersing the fluoride particles.

2. The liquid dispersion of fluoride particles according to claim 1,
wherein a content of the polyvinylidene fluoride is in a range of 0.01 mass% to 3 mass% with respect to a total mass of the liquid dispersion of fluoride particles.

3. The liquid dispersion of fluoride particles according to claim 1,
wherein a content of the fluoride particles is in a range of 1 mass% to 20 mass% with respect to a total mass of the liquid dispersion of fluoride particles.

4. The liquid dispersion of fluoride particles according to claim 1,
wherein the fluoride particles include at least one kind of fluoride particles of any among compounds represented by following chemical Formulas (1) to (3), barium strontium lanthanum fluoride, and barium strontium cerium fluoride
M¹ₐM²_{b}F_{(a+2b)} ... (1)
wherein M¹ is an alkali metal, M² is an alkaline earth metal, and a and b are integers satisfying conditions of 0 ≤ a ≤ 3 and 0 ≤ b ≤ 1;
M¹_{c}M³_{d}F_{(c+3d)} ... (2)
wherein M¹ is an alkali metal, M³ is Al, Y, or a lanthanoid, and c and d are integers satisfying the conditions of 0 ≤ c ≤ 5 and 0<d ≤ 3;
M²M³F₅ ... (3)
wherein M² is an alkaline earth metal and M³ is Al, Y or lanthanoid.

5. The liquid dispersion of fluoride particles according to claim 4,
wherein the M¹ₐM² _{b}F_{(a+2b)} is LiF, CaF₂, or MgF₂.

6. The liquid dispersion of fluoride particles according to claim 4,
wherein the M¹_{c}M³ₐF_{(c+3d)} is AlF₃, Na₃AlF₆, Na₅Al₃F₁₄, LaF₃, CeF₃, YF₃, YbF₃, NaYF₄, or NaYbF₄.

7. The liquid dispersion of fluoride particles according to claim 4,
wherein the M²M³F₅ is BaLaF₅, BaCeF₅, SrLaF₅, or SrCeF₅.

8. The liquid dispersion of fluoride particles according to claim 1,
wherein the organic solvent is at least one selected from a group consisting of N-methylpyrrolidone, hexamethylphosphoramide, and dimethylacetamide.
